# EUROPÄISCHE PATENTSCHRIFT

(11) **EP 0 891 693 B1**
(45) Veröffentlichungstag und Bekanntmachung des Hinweises auf die Patenterteilung: **30.10.2002**
(21) Anmeldenummer: 98112727.7
(22) Anmeldetag: 09.07.1998
(51) Int. Cl.: A01D 34/66

(54) **Mähscheibe und Mähwerk**
Disc cutter bar and mower device
Barre de coupe à disque et dispositif de coupe

(30) Priorität: 18.07.1997 US 896694
(43) Veröffentlichungstag der Anmeldung: 20.01.1999
(73) Patentinhaber: DEERE & COMPANY, Moline, Illinois 61265-8098 (US)
(72) Erfinder: Richardson, Craig Allen, Ottumwa, Iowa 52501 (US); Rosenbalm, Allan Wesley, Blakesburg, Iowa 52536 (US); Verhulst, Michael Joseph, Ottumwa, Iowa 52501 (US); Mellin, Michael James, Ottumwa, Iowa 52501 (US)
(74) Vertreter: Magin, Ludwig Bernhard

(56) Entgegenhaltungen:
- EP-A- 0 771 521
- DE-A- 1 582 506
- DE-A- 2 222 415
- FR-A- 2 297 552
- US-A- 4 531 349

## Beschreibung

Die Erfindung bezieht sich auf eine Mähscheibe mit einem Drehmittelpunkt und einem Randbereich, an dem mindestens ein Messer befestigbar ist, und mit mindestens einem Abweiser mit einer Abweiserfläche, die ein erstes, dem Randbereich zugewandtes Ende und ein zweites, dem Drehmittelpunkt zugewandtes Ende aufweist, wobei das erste Ende in der Schneidrichtung der Mähscheibe dem zweiten Ende vorauseilt und eine erste Verbindungslinie zwischen dem ersten Ende und dem zweiten Ende mit einer zweiten Verbindungslinie zwischen dem Messer und dem Drehmittelpunkt einen Winkel einschließt, und auf ein Mähwerk für eine Erntemaschine mit einer solchen Mähscheibe.

Bekannte Mähmaschinen, insbesondere Mähaufbereiter, beinhalten Mähwerke, die eine Vielzahl von Mähscheiben aufweisen. Bei breiten Mähaufbereitern muß das Mähgut von den äußeren Endbereichen des Mähwerks zu einem schmalen Aufbereiter, der das geschnittene Gut aufnimmt, gefördert werden. An vielen Maschinen verursacht ein Zusammenführen bei manchen Mähgutsorten Probleme bei der Schnittqualität in den äußeren Endbereichen des Mähwerks.

Die US-A-3,950,923 zeigt Mähscheiben, auf deren Oberfläche vier Abweiser aufgesetzt sind. Die Abweiser sind so angeordnet, daß ihre Anlenkpunkte die Eckpunkte eines Quadrates bilden. Jeder Abweiser weist eine Führungskante, die sich bezogen auf die Drehrichtung der Mähscheibe nach rückwärts zu einem Punkt erstreckt, der über dem Rand der Mähscheibe liegt, sowie eine Breitseite auf, die zusammen mit den Breitseiten der übrigen Abweiser die Seiten eines umgekehrten Prismas bestimmt. Die Abweiser heben das Gut an und fördern es, wobei sie das Mähgut zur Außenseite der Mähscheibe und damit in das ungeschnittene Gut treiben.

Die US-A-4,694,640 zeigt Mähscheiben, auf die Trommeln mit einem geringeren Durchmesser aufgesetzt sind, die mit der gleichen Geschwindigkeit und um die gleiche Drehachse rotieren wie die Mähscheiben. Die Trommeln weisen abstehende Mittel, wie beispielsweise Zähne oder Stäbe an den äußeren Oberflächen der Trommeln oder Vorsprünge bzw. Bleche oberhalb der Trommeln auf. Die Trommeln begrenzen den Bereich, in dem das Mähgut fließen kann, wodurch das Mähgut abgebremst und zusammengeballt wird und so das ungeschnittene Gut niedergedrückt wird, was zu einer schlechten Schnittqualität führt.

Die US-A-4,531,349 zeigt Mähscheiben, bei denen zwei Messer an erhöhten, gegenüberliegenden Kantenbereichen der Mähscheiben angebracht sind. Diese Kantenbereiche fallen zu den gegenüberliegenden Kantenbereichen hin ab und bilden abgesenkte Bereiche, die mittig zwischen den Messern angeordnet sind. Die abgesenkten Bereiche eilen den Messern voraus und sollen das Mähgut vor dem Schnitt anheben.

Die gattungsgemäße EP-A1-0 771 521 zeigt ein Scheibenmähwerk mit quer zur Fahrtrichtung nebeneinander auf einem Messerbalken angeordnete, rotierend antreibbare und mit Schneidmessern versehene Mähscheiben. Zwei der Mähscheiben sind mit Förderelementen versehen, welche Vorderkanten aufweisen, deren äußerer Endpunkt ihrem inneren Endpunkt in Drehrichtung vorauseilen, und welche mit einer Längsachse der Mähscheibenkontur einen spitzen Winkel bilden. Die Vorderkanten enden im Bereich des Schneidmessers, wodurch das Mähgut in Richtung der Mähscheibenmitte gefördert wird.

Das mit der Erfindung zu lösende Problem wird darin gesehen, daß bekannte Mähscheiben und Mähwerke das ungeschnittene Mähgut niederdrücken und so keine optimale Schnittqualität erreicht wird.

Das Problem wird erfindungsgemäß durch die Lehre der Patentansprüche 1 und 8 gelöst. Weitere vorteilhafte Ausgestaltungen und Weiterbildungen der Erfindung gehen aus den Unteransprüchen hervor.

Eine erfindungsgemäße Mähscheibe weist einen Drehmittelpunkt und einen Randbereich, an dem mindestens ein Messer befestigbar ist, und mindestens einen Abweiser mit einer Abweiserfläche auf. Ein erstes Ende der Abweiserfläche ist dem Randbereich der Mähscheibe und ein zweites Ende ist dem Drehmittelpunkt der Mähscheibe zugewandt. Das erste Ende eilt dem zweiten Ende der Mähscheibe bezogen auf die Schneidrichtung der Mähscheibe voraus. Eine erste Verbindungslinie zwischen dem ersten Ende und dem zweiten Ende und eine zweite Verbindungslinie zwischen dem Messer und dem Drehmittelpunkt schließen einen Winkel ein. Der Abweiser fördert Mähgut von dem Randbereich der Mähscheibe radial nach innen und wirkt Zentrifugalkräften entgegen. Es ist vorteilhaft, wenn die Abweiserfläche im wesentlichen auf der Verbindungslinie zwischen dem Messer und dem Drehmittelpunkt endet, da dann die Förderwirkung hauptsächlich im Randbereich der Mähscheibe auftritt. Der Abweiser wirkt schaufelartig und fördert das Mähgut aktiv nach innen. Bereits geschnittenes Mähgut wird nicht nach außen in das zu schneidende Gut gedrückt, sondern von diesem weggefördert. Der Abweiser greift dabei mit der Abweiserfläche in das durch das Messer geschnittene Mähgut ein. Die Abweiserfläche kann durch eine geschlossene Oberfläche gebildet werden. Es ist aber auch denkbar, eine unterbrochene Oberfläche vorzusehen. Der Abweiser kann auch aus mehreren Abweisereinzelteilen bestehen, deren Oberseiten gemeinsam die Abweiserfläche bilden.

Eine alternative erfindungsgemäße Mähscheibe weist einen Drehmittelpunkt und einen Randbereich, an dem mindestens ein Messer befestigbar ist, und mindestens einen Abweiser auf. Der Abweiser hat eine Abweiserfläche, die ein erstes, dem Randbereich zugewandtes Ende und ein zweites, dem Drehmittelpunkt zugewandtes Ende aufweist. Das erste Ende eilt dem zweiten Ende bezogen auf die Schneidrichtung der Mähscheibe voraus. Eine Verbindungslinie zwischen dem ersten Ende und dem zweiten Ende schneidet eine sich zwischen dem Messer und dem Drehmittelpunkt erstreckende Verbindungslinie zwischen dem Messer und dem Drehmittelpunkt, d. h. nicht in dem Drehmittelpunkt. Der Abweiser kann dabei, wie zuvor beschrieben, eine geschlossene oder unterbrochene Abweiserfläche aufweisen, die in das Mähgut eingreift und dieses schaufelartig von dem Randbereich der Mähscheibe nach innen fördert, oder er kann aus mehreren Einzelteilen bestehen.

Die Abweiserfläche des Abweisers kann unterschiedlich ausgebildet sein. So ist es beispielsweise denkbar, daß die Abweiserfläche senkrecht auf der Mähscheibe steht oder in der Schneidrichtung der Mähscheibe ansteigt und in der Art eines Gebläsepaddels wirkt. Besonders vorteilhaft ist es aber, wenn die Abweiserfläche in Richtung auf das zugehörige Messer hin ansteigt. Die Abweiserfläche schiebt sich bei einem Drehen der Mähscheibe in Schneidrichtung unter das geschnittene Mähgut und hebt dieses an, wodurch der schaufelartige Fördereffekt des Abweisers verstärkt wird.

Die erste Verbindungslinie zwischen dem ersten Ende und dem zweiten Ende der Abweiserfläche und die Verbindungslinie zwischen dem Messer und dem Drehmittelpunkt schließen einen Winkel ein. Die Größe des Winkels bestimmt, wie stark das erste Ende dem zweiten Ende in der Schneidrichtung der Mähscheibe vorauseilt. Schließen die erste Verbindungslinie und die zweite Verbindungslinie in Schneidrichtung einen spitzen Winkel ein, so eilt das erste Ende dem zweiten Ende nur wenig voraus, wodurch das Mähgut durch die Abweiserfläche in erster Linie von dem zu schneidenden Mähgut weg und weniger in Richtung auf den Drehmittelpunkt der Mähscheibe zu gefördert wird, wodurch ein Anhäufen von geschnittenem Mähgut im Bereich des Drehmittelpunktes der Mähscheibe vermieden wird. Als besonders günstig hat sich ein Winkel von etwa 25° erwiesen.

Der Abweiser kann in einfacher Weise durch ein Winkelstück gebildet werden, das auf der Mähscheibe in konventioneller Weise befestigt, beispielsweise verschweißt ist. Der Abweiser kann aber auch in die Präge- bzw. Biegeform oder, falls die Mähscheibe durch einen Kunststoff gebildet wird, in die Herstellungsform integriert sein.

Die Mähscheibe kann symmetrisch ausgestaltet werden, indem zumindest an in etwa gegenüberliegenden Seiten der Mähscheibe zwei Messer vorgesehen sind, denen jeweils ein Abweiser zugeordnet ist. Auf diese Weise erfolgt ein gleichmäßiges Schneiden und Fördern des Mähgutes, da die Messer und die Abweiser bei einem Drehen der Mähscheibe in Schneidrichtung in gleichmäßigen Abschnitten aufeinander folgen.

Der Fluß des Mähgutes wird weiter verbessert, wenn die Mähscheibe oval ausgebildet ist. Die Messer mit zugehörigen Abweisern sind zumindest im Bereich des größeren Durchmessers angeordnet. Es ist aber auch denkbar, weitere Messer mit oder ohne Abweiser in den übrigen Bereichen der Mähscheibe vorzusehen.

Eine erfindungsgemäße Mähscheibe kann im Mähwerk einer Erntemaschine eingesetzt werden. Es ist aber auch denkbar, eine solche Mähscheibe in einem anderen Mähwerk vorzusehen, bei dem ein Fördern des Mähgutes wünschenswert ist, beispielsweise im Mähwerk eines Geräts zur Rasenpflege wie einem Rasenmäher oder Rasentraktor, bei dem das Mähgut in Richtung eines Fangsacks oder einer Auswurföffnung gefördert werden soll.

Ein Mähwerk mit einer erfindungsgemäßen Mähscheibe kann an einer Erntemaschine wie einem Mähaufbereiter oder einem Schwadmäher eingesetzt werden, die eine Mähgutauslaßöffnung aufweisen, die schmaler ist als die Schnittbreite des jeweiligen Gerätes. Das Mähgut wird durch die erfindungsgemäßen Mähscheiben von dem noch zu schneidenden Mähgut weg, in Richtung der Mähgutauslaßöffnung gefördert. Zusätzlich zu den Abweiser aufweisenden Mähscheiben können an dem Mähwerk weitere Fördermittel vorgesehen sein, welche aber vor allem bei schmalen Mähwerken nicht unbedingt erforderlich sind. An die Mähgutauslaßöffnung der Erntemaschine kann sich beispielsweise eine Konditioniereinrichtung wie ein Walzen- oder Rotoraufbereiter anschließen, es kann aber auch eine Ablage im Schwad ohne weitere Aufbereitung erfolgen.

In größeren Mähwerken sind mehrere Mähscheiben vorgesehen. Um das Mähgut besonders in den Außenbereich von dem zu schneidenden Mähgut weg oder auch in Richtung einer Mähgutauslaßöffnung zu fördern, sind vorzugsweise die äußeren Mähscheiben entsprechend den vorstehenden Darstellungen ausgestaltet. Auch die weiter zur Mitte liegenden Mähscheiben können entsprechend ausgestaltet sein, wenn hier eine zusätzliche Förderwirkung erwünscht oder nötig ist.

Besonders bei Mähwerken mit mehreren Mähscheiben und insbesondere bei Mähwerken, die mehr als sieben Mähscheiben aufweisen, kann es nützlich sein, zusätzliche Fördermittel im Bereich der äußeren Mähscheiben vorzusehen. Hierzu können auf den äußeren Mähscheiben beispielsweise Trommeln vorgesehen sein, die eine geriffelte Oberfläche und/oder Paddel oder ähnliche Mittel zum Eingreifen in das Mähgut aufweisen, um das Mähgut in eine gewünschte Richtung zu fördern.

Um den Gutstrom weiter zu verbessern, können die Trommeln, die auf den den äußersten Mähscheiben benachbarten Mähscheiben aufgesetzt sind, niedriger, vorzugsweise halb so hoch, ausgeführt sein, wie die Trommeln auf den äußersten Mähscheiben. Dadurch wird es dem Mähgut ermöglicht, über die inneren Trommeln zu strömen, wodurch einem Verklumpen des Materials und damit einem Materialstau vorgebeugt wird. Auch auf den übrigen, weiter innen liegenden Mähscheiben können solche Trommeln vorgesehen werden, wenn dies der Förderung des Gutstroms dienlich ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Draufsicht auf einen Mähaufbereiter, mit einem Mähwerk und einem Aufbereitungsrotor, bei dem die Abdeckhaube des Aufbereitungsrotors entfernt wurde, so daß der Aufbereitungsrotor sichtbar wird, und bei dem der Schutz des Mähwerks aufgebrochen dargestellt ist, so daß ein Teil des Mähwerks sichtbar wird,
- Fig. 2: eine Ansicht einer linken Seite des Mähwerks,
- Fig. 3: eine perspektivische Ansicht eines vorderen, linksseitigen Bereichs des Mähwerks,
- Fig. 4: eine Draufsicht auf eine erfindungsgemäße Mähscheibe mit Abweisern und
- Fig. 5: eine Seitenansicht einer solchen Mähscheibe.

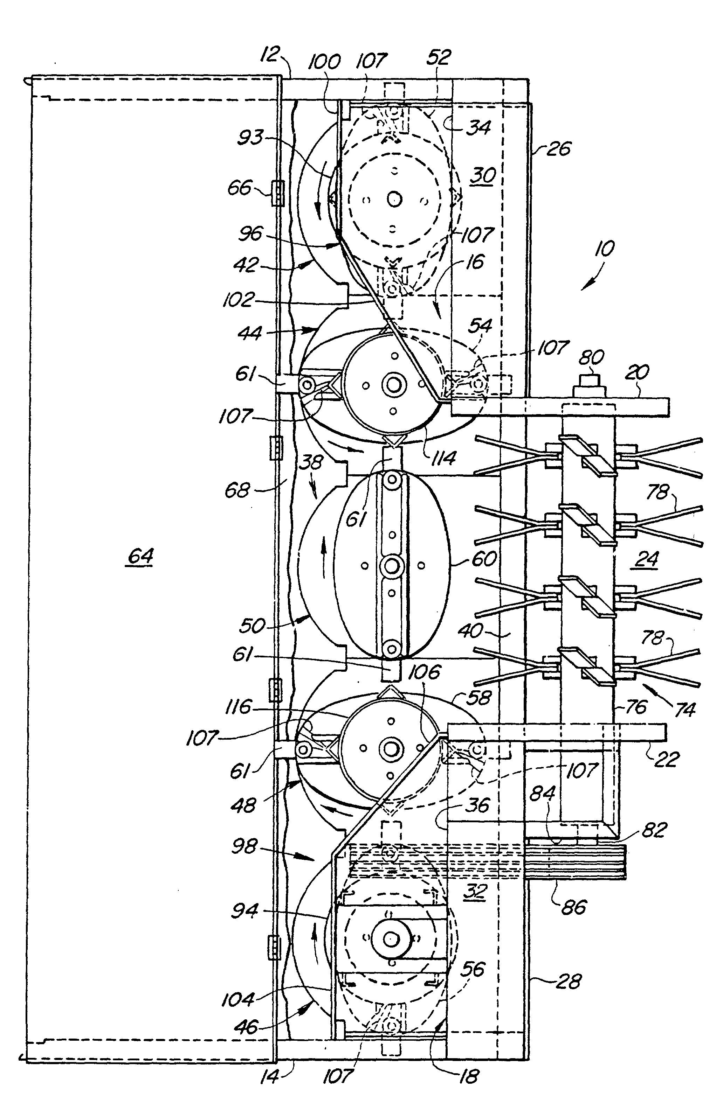

Die Figuren 1 bis 3 zeigen einen Teil eines Mähwerks eines Mähaufbereiters, der ein Gehäuse aufweist, das durch eine rechte und eine linke Seitenwand 12 und 14 bestimmt wird. Rechtsseitige und linksseitige aufrechte Schottwände 16 und 18 erstrecken sich innen von den Seitenwänden 12 und 14 weg und enden an vorderen Endbereichen von rechten und linken aufrechten, sich in Längsrichtung erstreckenden inneren Seitenwänden 20 und 22, die eine Mähgutauslaßöffnung 24 bestimmen. Die Seitenwände 16 und 18 können verschieden ausgebildet sein, weisen aber im vorliegenden Ausführungsbeispiel jeweils nach oben und nach vorne abgeschrägte Mittenbereiche 30 und 32 sowie jeweils vertikale obere Bereiche 34 und 36 auf.

Ein Mähwerk 38 erstreckt sich zwischen den Seitenwänden 12 und 14. Eine Versteifungsstrebe 40 mit quadratischem Querschnitt, die mit unteren Abschnitten von vertikalen, unteren Schottwandbereichen 26 und 28 verbunden ist, verlängert und bestimmt einen rückwärtigen Bereich des Mähwerks 38. Obwohl die vorliegende Erfindung in vorteilhafter Weise an Scheibenmähwerken unterschiedlicher Konstruktion eingesetzt werden kann, wird das gezeigte Mähwerk 38 in einer bekannten Ausführungsform gezeigt, die eine Mehrzahl zusammenwirkender Stirnräder (nicht gezeigt) aufweist, darunter Freilauf- und Antriebszahnräder, die wirksam verbunden sind, um ein Drehen der jeweiligen Antriebswellen einer Mehrzahl von Schneideinheiten, die voneinander beabstandet über die Länge des Mähwerks 38 angeordnet sind, zu bewirken. Für Einzelheiten eines solchen Mähwerks 38 wird auf die US-A-5,012,635 vom 07. Mai 1991 Bezug genommen, in der ein solches Mähwerk gezeigt wird, und die durch diesen Verweis in ihrer Gesamtheit in die vorliegende Darstellung einbezogen wird.

Die Schneideinheiten werden durch ein rechtes Paar, das eine rechte Schneideinheit 42 und eine rechte innere Schneideinheit 44, sowie durch ein linkes Paar, das eine linke Schneideinheit 46 und eine linke innere Schneideinheit 48 beinhaltet, und durch eine zentrale oder mittlere Schneideinheit 50 gebildet. Die Schneideinheiten 42, 44, 46, 48 und 50 beinhalten jeweils oval ausgebildete Mähscheiben 52, 54, 56, 58 und 60, wobei jede Mähscheibe 52, 54, 56, 58, 60 mit einem Paar von Messern 61 ausgestattet ist, die jeweils an gegenüberliegenden, Außenbereichen entlang einer Hauptachse der Mähscheiben 52, 54, 56, 58, 60 angeordnet sind. Die inneren Seitenwände 20 und 22 sind jeweils nach innen von den gegenüberliegenden Enden des Mähwerks 38 nur leicht mehr beabstandet als die Drehachsen der Mähscheiben 54, 58 der Schneideinheiten 44 und 48.

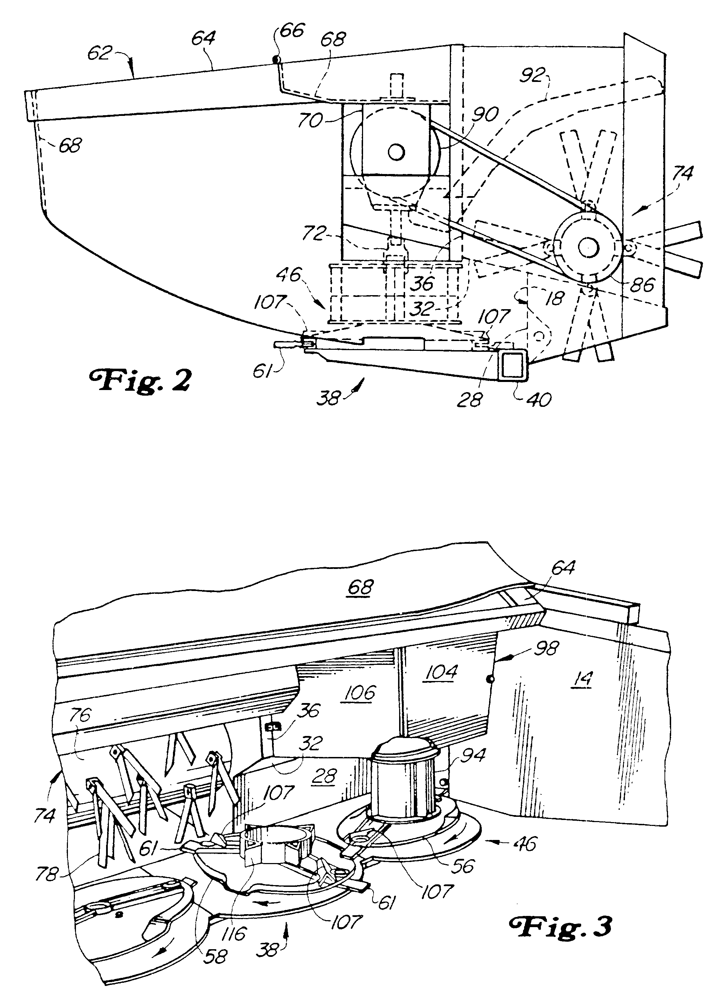

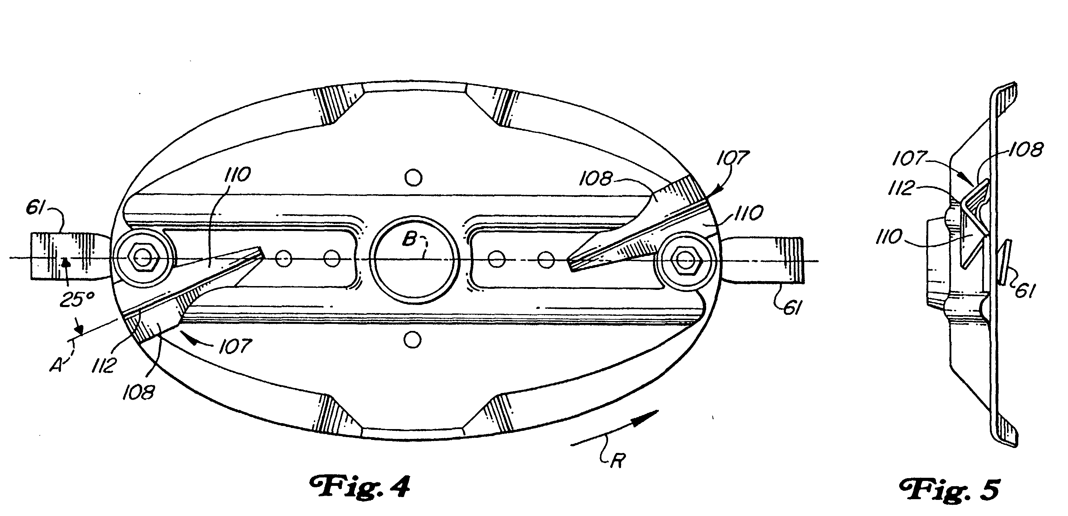

Wie es in den Figuren 2 - 4 dargestellt ist, beinhaltet ein Schutz 62 eine Platte 64 an einer oberen Stelle des Gehäuses 10, die sich vertikal über das Mähwerk 38 erstreckt. Die Platte 64 ist von oben betrachtet rechteckig und zwischen den Seitenwänden 12 und 14 angeordnet und erstreckt sich von einem Scharnier 66 aus nach vorne, wobei es die Platte 64 mit einem Rahmenelement 68 verbindet, das sich zwischen den Seitenwänden 12 und 14 erstreckt. Der Schutz 62 weist weiter eine rechteckige Platte 68 aus flexiblem Material auf, die mit einer vorderen Ecke der Platte 64 verbunden ist, so daß sie sich von der Platte 64 nach unten erstreckt, wenn der Schutz 62 sich in seiner, in Fig. 2 gezeigten Arbeitsstellung befindet. Der Schutz 62 wird in Fig. 3 in einer nach hinten geklappten Außer-Betrieb-Stellung gezeigt.

Ein Getriebegehäuse 70 für den Hauptantrieb ist vertikal über dem linken Ende der abschließenden Schneideinheit 46 angeordnet und beinhaltet eine sich nach unten erstreckende Eingangswelle, die über eine doppelt u-förmige Verbindung 72 mit einer aufrechten Antriebswelle (nicht gezeigt) für die Mähscheibe 56 der Schneideinheit 46 verbunden ist. Das in dem Getriebegehäuse 70 enthaltene Getriebe und das Mähwerk 38 sind so angeordnet, daß das linke Paar von Mähscheiben 56 und 58 im Uhrzeigersinn rotiert, während sich das rechte Paar von Mähscheiben 52 und 54 im Gegenuhrzeigersinn dreht; die jeweilige Drehrichtung wird in der Zeichnung durch Pfeile verdeutlicht. Die mittlere Mähscheibe 60 rotiert entsprechend der Darstellung im Uhrzeigersinn, sie kann aber ebenso im Gegenuhrzeigersinn rotieren, ohne die vorliegende Erfindung zu beeinflussen. Die Drehrichtung der verschiedenen Mähscheiben 52, 54, 56, 58 hat zur Folge, daß das Mähgut auf die Mähgutauslaßöffnung 24 zu gefördert wird.

Quer über die Mähgutauslaßöffnung 24 ist zum Aufbereiten des durch die Mähscheiben 52, 54, 56, 58 dorthin geförderten Mähguts ein Aufbereitungsrotor 74 angeordnet, der eine Trommel 76 aufweist, die eine Mehrzahl von gelenkig angebrachten Schlegeln 78 trägt und ein rechtsseitiges Ende hat, das in der Nähe der rechten inneren Seitenwand 20 endet, und ein linkes Ende aufweist, das sich ein kurzes Stück durch die linke innere Seitenwand 22 erstreckt. Koaxiale rechte und linke Wellen 80 und 82 gehen jeweils von gegenüberliegenden Endbereichen der Trommel 76 ab und sind in Lagern (nicht gezeigt) gelagert, die von der Seitenwand 20 und einer Haltewand 84 gehalten werden, die von der Seitenwand 22 beabstandet angeordnet ist. Eine Mehrrippenkeilriemenscheibe 86 ist auf die Welle 82 aufgesetzt und über eine Mehrzahl von Keilriemen 88 mit einer Riemenscheibe 90 verbunden, die auf eine Ausgangswelle aufgesetzt ist, die direkt von dem Getriebegehäuse 70 ausgeht. Wie es in Fig. 2 gezeigt ist, erstreckt sich eine Haube 92 angrenzend oberhalb einer zylindrischen Bahn, die durch die Schlegel 78 beschrieben wird, um das Mähgut, das von den Schlegeln 78 geführt wird, aufzubereiten.

Anstelle des Aufbereitungsrotors 74 kann ein Walzenaufbereiter, der gegenläufig rotierende Aufbereitungswalzen aufweist, verwendet werden, wobei dann passende Änderungen an dem Getriebe in dem Getriebegehäuse 70 gemacht werden müßten, um die Aufbereitungswalzen anzutreiben.

Aus Fig. 3 kann ersehen werden, daß die rechte und die linke Mähscheibe 52 und 56 jeweils mit geriffelten Aufsatztrommeln bzw. Trommeln 93 und 94 versehen sind, welche an der rechten und linken Mähscheibe 52 und 56 angebracht sind und mit rechten und linken Leitmitteln 96 und 98 zusammenwirken, um das Mähgut zu der Mähgutauslaßöffnung 24 und von dort zu dem Aufbereitungsrotor 74 zu führen. Die Leitmittel 96 beinhalten aufrechte, schräge Plattenbereiche 100, die sich nach innen von der rechten Seitenwand 12 in einem Abstand, der ungefähr dem kleineren Durchmesser der ovalen Mähscheibe 52 entspricht, erstrecken, wobei der Plattenbereich 100 mit einem schrägen Plattenbereich 102 verbunden ist, der sich nach rückwärts zu einer vorderen Kante der rechten, inneren Seitenwand 20 erstreckt. Ähnlich weist das Leitmittel 98 einen aufrechten, schrägen Plattenbereich 104 auf, der sich von der linken Seitenwand 14 in einem Abstand, der in etwa dem kleineren Durchmesser der ovalen Mähscheibe 56 entspricht, erstreckt, wobei der Plattenbereich 104 mit einem schrägen Plattenbereich 106 verbunden ist, der sich nach rückwärts zu einer vorderen Kante der linken, inneren Seitenwand 22 erstreckt.

Für Details des Aufbaus wird auf bekannte Mähaufbereiter verwiesen. In der folgenden Beschreibung wird auf eine Ausführungsform der Erfindung genauer eingegangen.

An genau gegenüberliegenden Punkten an der Oberseite einer Mähscheibe 52, 54, 56, 58 und sich nach innen vom Rand jeder der rechten und jeder der linken Mähscheiben 52, 54, 56 und 58 erstreckend, ist ein Paar von in das Mähgut eingreifenden Abweisern 107 vorgesehen, die dazu dienen, die Bewegung des Mähgutes vom Endbereich des Mähwerks 38 zu der Mähgutausgabeöffnung 24 zu verbessern. Mit Bezug auf die Figuren 4 und 5 wird deutlich, daß die Abweiser 107 eine eckige Form aufweisen und hier als aus einem Metallstück gebogenes Winkelstück dargestellt sind. Die Abweiser 107 können jedoch jeweils auch aus einem Gußstück bestehen, das lösbar mit der zugehörigen Mähscheibe 52, 54, 56, 58 verbunden ist, oder die Abweiser 107 können in die Biegeform der Mähscheibe 52, 54, 56, 58 integriert sein. Das Metallstück, das jeden Abweiser 107 bestimmt, hat jeweils Schenkel 108 und 110, die unter einem rechten Winkel zusammenlaufen, um eine Kante 112 zu bilden, wobei sich die Kante 112, wie beim Betrachten der Mähscheibe 52, 54, 56, 58 von oben gesehen werden kann, entlang einer ersten Verbindungslinie A zwischen einem ersten Ende des Abweisers 107, das einem Randbereich der Mähscheibe 48 zugewandt ist, und einem zweiten einem Drehmittelpunkt der Mähscheibe 38 zugewandten Ende des Abweisers 107 erstreckt, die mit einer zweiten Verbindungslinie B, die sich durch eine Lagerstelle eines Messers 61 und den Drehmittelpunkt erstreckt, einen spitzen Winkel, der hier mit etwa 25° angegeben wird, bildet. Obwohl die Winkellage der Abweiser 107 etwas variieren kann, hat sich herausgestellt, daß die generelle Winkellage wichtig für ein erfolgreiches Arbeiten der Abweiser 107 ist, da sie der Neigung des Mähgutes entgegenwirkt, durch Zentrifugalkräfte nach außen gedrängt zu werden. Eine solche Bewegung des Mähgutes nach außen ist nicht erwünscht, da nicht geschnittenes Gut niedergedrückt wird und so verursacht wird, daß das Gut bezogen auf das nicht niedergedrückte Mähgut in einer ungleichen Höhe geschnitten wird. Darüber hinaus wird dadurch das Mähgut, daß das ungeschnittene Gut niederdrückt, nochmals geschnitten, wodurch ein Ergebnis erzielt wird, das im Schwad nicht wünschenswert ist.

Die Abweiser 107 sind so angeordnet, daß ihre jeweiligen äußeren Enden, bezogen auf die Drehrichtung der Mähscheiben 52, 54, 56, 58, ihren zweiten Enden sowie den Anlenkpunkten der Messer 61, vorauseilen, wobei ihre Schenkel 108 ins Mähgut eingreifende Abweiserflächen bestimmen. Während die oberen Bereiche der Mähscheiben 52, 54, 56, 58 eine in etwa konvexe Form haben, nimmt die Höhe der Schenkel 108 und 110 nach innen hin ab, wobei aber die Kante 112 parallel zu den Messern 61 angeordnet ist.

An den oberen Bereichen der rechten und der linken inneren Mähscheiben 54 und 58 sind jeweils relativ kurze, ins Mähgut eingreifende Trommeln 114 und 116 angeordnet. Die Trommeln 114 und 116 weisen weniger als die halbe Höhe der äußeren Trommeln 93 und 94 auf, so daß der Gutstrom vom äußeren Teil des Mähwerks 38 zu der Mähgutauslaßöffnung 24 nicht behindert wird, sondern über die oberen Bereiche der kurzen Trommeln 114 und 116 fließen kann.

Es soll hier bemerkt werden, daß es nicht unbedingt nötig ist, auf den oberen Bereichen der linken und rechten inneren Mähscheibe 54 und 58 Mittel zum Zusammenführen des Mähgutes vorzusehen, wenn das Mähwerk 38 von solcher Länge ist, daß es sieben Mähscheiben, wie hier gezeigt oder weniger aufweist. Darüber hinaus wird bemerkt, daß bei Mähwerken 38, die länger sind als solche, die sieben Mähscheiben aufweisen, beispielsweise solche die acht Mähscheiben aufweisen, eine angemessene Zusammenführung erreicht wird, wenn hier nur die linken und rechten inneren Mähscheiben mit den Abweisern 107 ausgestattet sind. Die gezeigte Benutzung von zusammenführenden Mitteln auf dem rechten Paar von Mähscheiben 52 und 54 und auf dem linken Paar von Mähscheiben 56 und 58 ist notwendig, wenn Mähwerke eingesetzt werden, über deren Länge neun Mähscheiben angebracht sind.

Es wird davon ausgegangen, daß der Betrieb des Mähaufbereiters, soweit die ins Mähgut eingreifenden Abweiser 107 und Trommeln 114 und 116 betroffen sind, aus der vorstehenden Beschreibung klar hervorgeht. Es genügt wohl zu sagen, daß die Abweiser 107 so arbeiten, daß sie geschnittenes Mähgut von dem ungeschnittenen Gut weg und auf die Mähgutauslaßöffnung 24 in solch einer wirksamen Art und Weise fördern, daß das geschnittene Mähgut sich nicht ansammelt und damit ungeschnittenes Gut niedergedrückt und so dem gewünschten Schneidergebnis im Wege steht. Zusätzlich arbeiten die Abweiser 107 so, daß sie eine gleichmäßigere Zuführung von geschnittenem Mähgut über die gesamte Breite des Mähaufbereiters bewirken, als dies bei bekannten Mähaufbereitern der Fall ist, deren Mähwerk so aufgebaut ist, daß dessen Mähscheiben das Mähgut zur Mitte des Mähwerks fördern.

## Patentansprüche

1. Mähscheibe (52, 54, 56, 58) mit einem Drehmittelpunkt und einem Randbereich, an dem mindestens ein Messer (61) befestigbar ist, und mit mindestens einem Abweiser (107) mit einer Abweiserfläche, die ein erstes, dem Randbereich zugewandtes Ende und ein zweites, dem Drehmittelpunkt zugewandtes Ende aufweist, wobei das erste Ende in der Schneidrichtung der Mähscheibe (52, 54, 56, 58) dem zweiten Ende vorauseilt und eine erste Verbindungslinie (A) zwischen dem ersten Ende und dem zweiten Ende mit einer zweiten Verbindungslinie (B) zwischen dem Messer (61) und dem Drehmittelpunkt einen Winkel einschließt, **dadurch gekennzeichnet, daß** die Abweiserfläche im wesentlichen auf der Verbindungslinie (B) zwischen dem Messer (61) und dem Drehmittelpunkt endet.

2. Mähscheibe nach Anspruch 1, **dadurch gekennzeichnet, daß** die Verbindungslinie (A) die sich zwischen dem Messer (61) und dem Drehmittelpunkt erstreckende Verbindungslinie (B) zwischen dem Messer (61) und dem Drehmittelpunkt schneidet.

3. Mähscheibe nach Anspruch 1 oder 2, **dadurch gekennzeichnet, daß** die Abweiserfläche in Richtung des zugehörigen Messers (61) ansteigt.

4. Mähscheibe nach einem oder mehreren der vorherigen Ansprüche, **dadurch gekennzeichnet, daß** der Winkel, der bezogen auf die Schneidrichtung zwischen der ersten Verbindungslinie (A) und der zweiten Verbindungslinie (B) angeordnet ist, ein spitzer Winkel ist.

5. Mähscheibe nach einem oder mehreren der vorherigen Ansprüche, **dadurch gekennzeichnet, daß** der Abweiser (107) durch ein Winkelstück mit zwei Schenkeln (108, 110) gebildet wird.

6. Mähscheibe nach einem oder mehreren der vorherigen Ansprüche, **dadurch gekennzeichnet, daß** an dem Randbereich der Mähscheibe (52, 54, 56, 58) zwei im allgemeinen gegenüberliegende Messer (61) angeordnet sind, denen jeweils ein Abweiser (107) zugeordnet ist.

7. Mähscheibe nach einem oder mehreren der vorherigen Ansprüche, **dadurch gekennzeichnet, daß** die Mähscheibe (52, 54, 56, 58) eine zumindest annähernd ovale Grundform aufweist und daß zumindest im Bereich des größeren Durchmessers, Messer (61) mit zugehörigen Abweisern (107) angeordnet sind.

8. Mähwerk (38) für eine Erntemaschine mit wenigstens einer Mähscheibe (52, 54, 56, 58) nach einem oder mehreren der vorherigen Ansprüche.

9. Mähwerk nach Anspruch 8, **dadurch gekennzeichnet, daß** die Erntemaschine ein Mähaufbereiter oder ein Schwadmäher mit einer Mähgutauslaßöffnung (24) ist, die schmaler ist als die Schnittbreite.

10. Mähwerk nach Anspruch 8 oder 9, **dadurch gekennzeichnet, daß** das Mähwerk mehrere Mähscheiben (52, 54, 56, 58, 60) aufweist, von denen zumindest die äußeren Mähscheiben (52, 54, 56, 58) nach einem oder mehreren der Ansprüche 1 bis 8 ausgebildet sind.

11. Mähwerk nach Anspruch 10, **dadurch gekennzeichnet, daß** zumindest auf den äußeren Mähscheiben (52, 54, 56, 58) des Mähwerks (38) zusätzliche Fördermittel, vorzugsweise in das Mähgut eingreifende Trommeln (93, 94, 114, 116), vorgesehen sind.

12. Mähwerk nach Anspruch 10 oder 11, **dadurch gekennzeichnet, daß** zumindest auf den den äußersten Mähscheiben (52, 56) benachbarten Mähscheiben (54, 58) Trommeln (114, 116) vorgesehen sind, die nur etwa halb so hoch sind, wie die Trommeln (93, 94) auf den äußersten Mähscheiben (52, 56).

## Claims

1. A mower disc (52, 54, 56, 58) with a centre of rotation and an edge region, on which at least one blade (61) can be fixed, and with at least one deflector (107) with a deflecting surface, which has a first end facing the edge region and second end facing the centre of rotation, wherein the first end leads the second end in the cutting direction of the mower disc (52, 54, 56, 58) and a first connecting line (A) between the first end and second end includes an angle with a second connecting line (B) between the blade (61) and the centre of rotation, **characterized in that** the deflecting surface terminates substantially at the connecting line (B) between the blade (61) and centre of rotation.

2. A mower disc according to claim 1, **characterized in that** the connecting line (A) intersects the connecting line (B) extending between the blade (61) and the centre of rotation between the blade (61) and the centre of rotation.

3. A mower disc according to claim 1 or 2, **characterized in that** the deflecting surface rises in the direction of the associated blade (61).

4. A mower disc according to one or more of the preceding claims, **characterized in that** the angle which lies between in the first connecting line (A) and the second connecting line (B) as related to the cutting direction is an acute angle.

5. A mower disc according to one or more of the preceding claims, **characterized in that** the deflector (107) is formed by an angle part with two flanges (108, 110).

6. A mower disc according to one or more of the preceding claims, **characterized in that** two generally opposite blades (61) are arranged on the edge region of the mower disc (52, 54, 56, 58), with a deflector (107) associated with each.

7. A mower disc according to one or more of the preceding claims, **characterized in that** the mower disc (52, 54, 56, 58) has an at least approximately oval basic shape and **in that** blades (61) with associated deflectors (107) are arranged at least in the region of the major diameter.

8. A mower mechanism (38) for a harvesting machine, with at least one mower disc (52, 54, 56, 58) according to one or more of the preceding claims.

9. A mower mechanism according to claim 8, **characterized in that** the harvesting machine is a mower conditioner or a swath mower with an outlet opening (24) for mowed material which is narrower than the cutting width.

10. A mower mechanism according to claim 8 or 9, **characterized in that** the mower mechanism comprises a plurality of mower discs (52, 54, 56, 58, 60), of which at least the outer mower discs (52, 54, 56, 58) are formed according to one or more of claims I to 8.

11. A mower mechanism according to claim 10, **characterized in that** additional feeder means, preferably drums (93, 94, 114, 116) engaging in the mowed material, are provided at least on the outer mower discs (52, 54, 56, 58).

12. A mower mechanism according to claim 10 or 11, **characterized in that** drums (114, 116) which are only about half the height of the drums (93, 94) on the outermost mower discs (52, 56) are provided at least on the mower discs (54, 58) adjacent the outermost mower discs (52, 56).

## Revendications

1. Disque de coupe (52, 54, 56, 58) avec un centre de rotation et une zone périphérique, sur laquelle on peut fixer au moins un couteau (61), et avec au moins un déviateur (107) avec une surface de déviation, qui présente une première extrémité, tournée vers la zone périphérique, et une deuxième extrémité tournée vers le centre de rotation, la première extrémité précédant la deuxième extrémité dans le sens de coupe du disque de coupe (52, 54, 56, 58) et une première ligne de liaison (A) entre la première extrémité et la deuxième extrémité formant un angle avec une deuxième ligne de liaison (B) entre le couteau (61) et le centre de rotation, **caractérisé en ce que** la surface de déviation se termine sensiblement sur la ligne de liaison (B) entre le couteau (61) et le centre de rotation.

2. Disque de coupe selon la revendication 1, **caractérisé en ce que** la ligne de liaison (A) coupe la ligne de liaison (B) s'étendant entre le couteau (61) et le centre de rotation entre le couteau (61) et le centre de rotation.

3. Disque de coupe selon la revendication 1 ou 2, **caractérisé en ce que** la surface de déviation augmente en direction du couteau (61) spécifique.

4. Disque de coupe selon l'une quelconque ou plusieurs des revendications précédentes, **caractérisé en ce que** l'angle, qui est disposé par rapport au sens de coupe entre la première ligne de liaison (A) et la deuxième ligne de liaison (B), est un angle aigu.

5. Disque de coupe selon l'une quelconque ou plusieurs des revendications précédentes, **caractérisé en ce que** le déviateur (107) est formé par une pièce coudée avec deux branches (108, 110).

6. Disque de coupe selon l'une ou plusieurs des revendications précédentes, **caractérisé en ce que** sur la zone périphérique du disque de coupe (52, 54, 56, 58) sont disposés deux couteaux (61) se faisant face en général, à chacun desquels est attribué un déviateur (107).

7. Disque de coupe selon l'une quelconque ou plusieurs des revendications précédentes, **caractérisé en ce que** le disque de coupe (52, 54, 56, 58) présente une forme au moins approximativement ovale et **en ce que** des couteaux (61) avec des déviateurs (107) spécifiques sont disposés au moins dans la zone du plus grand diamètre.

8. Dispositif de coupe (38) pour une moissonneuse avec au moires un disque de coupe (52, 54, 56, 58) selon l'une quelconque ou plusieurs des revendications précédentes.

9. Dispositif de coupe selon la revendication 8, **caractérisé en ce que** la moissonneuse est un conditionneur de coupe ou une faucheuse-andaineuse avec une ouverture d'évacuation de matière à couper (24) qui est plus étroite que la largeur de coupe.

10. Dispositif de coupe selon la revendication 8 ou 9, **caractérisé en ce que** le dispositif de coupe présente plusieurs disques de coupe (52, 54, 56, 58, 60), dont au moins les disques de coupe (52, 54, 56, 58) extérieurs sont conçus selon l'une quelconque ou plusieurs des revendications 1 à 8.

11. Dispositif de coupe selon la revendication 10, **caractérisé en ce que** des moyens de transport supplémentaires, de préférence des tambours (93, 94, 114, 116) s'engageant dans la matière à couper sont prévus au moins sur les disques de coupe (52, 54, 56, 58) extérieurs du dispositif de coupe (38).

12. Dispositif de coupe selon la revendication 10 ou 11, **caractérisé en ce que** des tambours (114, 116), qui ont seulement à peu près la demi-hauteur des tambours (93, 94) sur les disques de coupe (52, 56) extérieurs, sont prévus au moins sur les disques de coupe (54, 58) voisins des disques de coupe (52, 56) les plus extérieurs.
